# EUROPEAN PATENT APPLICATION

(11) **EP 3 069 776 A1**
(43) Date of publication of application: **21.09.2016**
(21) Application number: 14861482.9
(22) Date of filing: 06.06.2014
(51) Int. Cl.: B01D 46/42, F24F 3/16

(54) **FILTER CLEANING UNIT, SELF-CLEANING AIR CLEANING DEVICE AND METHOD FOR USING SAME**

(30) Priority: 16.11.2013 CN 201310578613
(71) Applicant: Feng, Xiaohong, Xi'an, Shaanxi 710061 (CN)
(72) Inventor: Feng, Xiaohong, Xi'an, Shaanxi 710061 (CN)
(74) Representative: Zhu, Junyi
(86) International application number: PCT/CN2014/079316
(87) International publication number: WO 2015/070594

(57) **Abstract**

A cleaning unit for filter, self-cleaning air purification apparatus and use method thereof are provided. A dust suction tube (3) is installed on the front side of a filter by a mounting frame (1); removing, by means of suction force, the substance absorbed on the filter; conducting "online" cleaning and recovering of the filter in the air cleaning device (8); and aggregate suspended particles and increase their size, by using a particle light-heat aggregation unit (10) consisting of a light source module and a heating module, with optical-wave effect and thermal-polymerization effect, thus enabling the filter to effectively trap the suspended particles, and greatly improving the cleaning effect.

## Description

### FIELD OF THE INVENTION

The present invention belongs to the field of air purification apparatus, especially relates to a cleaning unit for filter, self-cleaning air purification apparatus and use method thereof.

### BACKGROUND OF THE INVENTION

Air purification apparatus is widely used in fields such as aerospace technology, microelectronics, semiconductor, pharmaceuticals, food product, chemical engineering and public hygienics. Currently, the filter used in air purification apparatus is disposable product, which is directly replaced with a new one when its adsorption capacity drops into a certain low level. The replaced filter cannot be recycled and becomes pollutant. Besides, the cost is high for replacement of filter in both material and money, and the replacement of filter may also be quite harmful for the workers handling the process. Thus, the improvement in the structure and use of the filter may significantly improve the performance and cost efficiency of the air purification apparatus.

And currently the filter in air purification apparatus is not doing well when dealing with microparticles in the air, especially when the air quality deteriorates severely, the existing air purification apparatuses cannot operate effectively in air purification.

### SUMMARY

The objective of the present invention is to provide a cleaning unit for filter, self-cleaning air purification apparatus and use method thereof.

In order to achieve the above object, the present invention adopts the following technical solution.

A cleaning unit for filter may be provided, which comprises a frame and a dust suction tube provided on the frame, wherein the dust suction tube may be provided with dust suction pores in communication to the inside of the dust suction tube and a connection port for vacuum cleaner.

The frame may be further provided with a light source module and a heating module.

There are a plurality of dust suction pores which may be formed in a shape of hole or slot.

The cleaning unit may further include a driving module in connection with the dust suction tube.

The driving module may include a motor, a belt and a track, wherein the track and the motor may be provided on the frame, the end of the dust suction tube may be arranged on the track, and the belt may have one end connected with the motor and another end connected with the dust suction tube.

A self-cleaning air purification apparatus may be provided, including a filtering unit, a cleaning unit and a particle light-and-heat-coagulation unit, wherein the cleaning unit may include a frame provided at the air input side of the filtering unit and a dust suction tube provided on the frame, the dust suction tube is provided thereon with dust suction pores in communication to the inside of the dust suction tube and a connection port for vacuum cleaner, and the particle light-and-heat-coagulation unit may be integrally provided on the frame or separately provided at the air input side of the filtering unit.

The particle light-and-heat-coagulation unit may include a light source module and a heating module.

The light source module may be a red-band LED, and the heating module may be infrared light or electric heating wire.

The cleaning unit may further include a driving module in connection with the dust suction tube.

A method for using the above self-cleaning air purification apparatus may be provided, including:
(1) turning on the particle light-and-heat-coagulation unit so as to enable the particle light-and-heat-coagulation unit to radiate light and/or heat; wherein the radiated light covers the air flowing area at the air input side of the filtering unit, and the temperature of the air flowing area is raised by the radiated heat to 20-30 degrees Celsius;
(2) after the step (1), filtering air to be processed which is introduced into the self-cleaning air purification apparatus using the filtering unit, and outputting the filtered air;
(3) stop introduction of air to be processed into the self-cleaning air purification apparatus within a defined period, wherein in the defined period, a vacuum cleaner operates, which is connected with the dust suction tube at the connection port for vacuum cleaner, while the dust suction tube is moved on the frame to suck the dust or dirt absorbed on the filtering unit through the dust suction pores.

The present invention has following advantageous effects.

The dust suction tube is mounted adjacent to the filtering unit in order to remove the dust or dirt on the filtering unit using an external suction force, thus the filtering unit may be refreshed or recovered within the air purification apparatus, and unnecessary frequent replacement for filtering unit can be avoided, which is cost-saving, environment friendly, and safe for the operators and workers. Further, the use of light source module and heating module may provide indication signals for the self-cleaning process of the filtering unit to reduce or eliminate errors in operation, on the other hand, may provide optical or thermal effect to coagulate the suspended micro particles to increase their particle size which tend to be more easily blocked by the filtering unit so as to more quickly coagulate the micro particles and reduce harmful substances, significantly improving the air purification performance as a whole.

In the present invention, the dust suction tube is movable on the frame under drive of the driving module, and so the need of many dust suction tubes can be avoided, which may clean the filtering unit in a more complete and deep manner without compromising the adsorption of the filtering unit, and may be easily adapted as automatic process.

In the present invention, the cleaning unit for filter may have a simple structure which means minimized modification or change for the existing air purification apparatus and can be widely applied in an integrated or combined or complete set of clean air supplying equipment.

### Brief Description of Drawings

Fig.1 schematically illustrates the structure of the cleaning unit in the present invention; and
Fig.2 schematically illustrates the structure of the self-cleaning air purification apparatus in the present invention; and

In Figures:
1: frame; 2: LED; 3: dust suction tube; 4: dust suction pores; 5: connection port for vacuum cleaner; 6: motor; 7: belt; 8: air purification apparatus; 9: cleaning unit; 10: particle light-and-heat-coagulation unit; 11: primary filtering unit of medium efficiency; 12: secondary filtering unit of high efficiency (HEPA filter); and 13: auxiliary fan for driving fresh air.

### DETAILED DESCRIPTION OF THE EMBODIMENTS

The present invention will be described in detail with reference to the Figures.

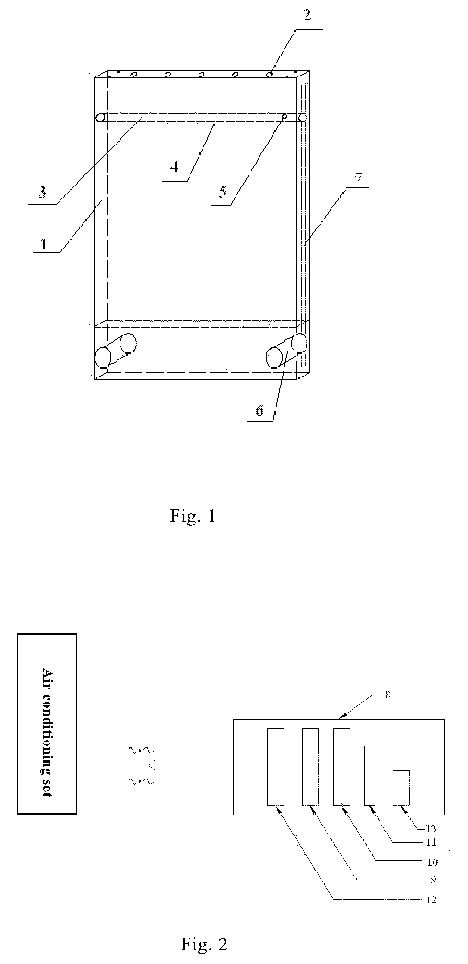

Referring to Figures 1 and 2, a self-cleaning air purification apparatus may be provided, which may comprise a filtering unit (filter), a cleaning unit 9 and a particle light-and-heat-coagulation unit 10. The cleaning unit 9 may include a frame 1 provided at the air input side of the filtering unit and a dust suction tube 3 provided on the frame 1. The dust suction tube 3 may be provided with dust suction pores 4 in communication to the inside of the dust suction tube 3 and a connection port 5 for vacuum cleaner. There are a plurality of dust suction pores 4, which may be formed in a shape of hole or slot. The particle light-and-heat-coagulation unit 10 may be integrally provided on the frame 1 or separately provided at the air input side of the filtering unit. The particle light-and-heat-coagulation unit 10 may include a light source module and a heating module. The light source module may be a red-band LED 2, and the heating module may be infrared light or electric heating wire. The cleaning unit 9 may further include a driving module in connection with the dust suction tube 3. The driving module may include a motor 6, a belt 7 and a track. The track and the motor 6 may be provided on the frame 1. The end of the dust suction tube 3 may be arranged on the track. The belt 7 is connected with the motor 6 at one end and is connected with the dust suction tube 3 at another end. The driving force of the motor may be transmitted through the belt to the dust suction tube so as to enable the dust suction tube to move along the track on the frame.

A method for using the above self-cleaning air purification apparatus may be provided, including:
(1) turning on the particle light-and-heat-coagulation unit 10 so as to enable the particle light-and-heat-coagulation unit 10 to radiate light (for example from red band LED) and/or heat (from infrared light or electric heating wire); wherein the radiated light covers the air flowing area at the air input side of the filtering unit, and the temperature of the air flowing area is raised by the radiated heat to 20-30 degrees Celsius;
(2) after the step (1), filtering air to be processed which is introduced into the self-cleaning air purification apparatus using the filtering unit, and outputting the filtered air;
(3) stop introduction of air to be processed into the self-cleaning air purification apparatus within a defined period, wherein in the defined period, a vacuum cleaner operates, which is connected with the dust suction tube 3 at the connection port 5 for vacuum cleaner, while the dust suction tube is moved on the frame to suck the dust or dirt absorbed on the filtering unit through the dust suction pores 4 so as to clean the filtering unit.

### Embodiment

An air purification apparatus in a ventilation system in an air duct type central air-conditioning system may be provided, sequentially including an auxiliary fan 13 for driving fresh air, a primary filtering unit 11, a particle light-and-heat-coagulation unit 10, a cleaning unit 9 and a secondary filtering unit 12 of high efficiency. The cleaning unit may include a belt, a track, a motor, flexible pipeline, a frame and a dust suction tube, and the cleaning unit may be configured to clean and remove particle substance highly pollutant, poisonous or harmful at the surface of or inside vulnerable devices (such as secondary filter like HEPA filter)).

The particle light-and-heat-coagulation unit may include a red band LED (light source module) and a heating module.

Test example: air is used as the testing subject, a HEPA filter is used as the only one filter, a dust particle counter is used as the counting equipment, while the humidity is not monitored. The air in round-shaped air duct is blown using a fan, and the round-shaped air duct is well sealingly connected with the HEPA filter, and the light source module and the heating module are mounted in the round-shaped air duct. The counting equipment is located at the back end of the HEPA filter to collect the data about air samples for comparison with the data about unfiltered air. Comparison shows, the number of particles passing through the HEPA filter with only the red band LED lighting is reduced by approximately 15∼20% than that without the red band LED lighting, and the number of particles passing through the HEPA filter with only the temperature above 20 degrees Celsius is reduced by approximately 20∼30% than that with a temperature under 20 degrees Celsius. If the heating and the lighting are applied at the same time (red band LED lighting and temperature above 20 degrees Celsius), the number of particles passing through the HEPA filter is reduced by about 25∼35%. The test example shows, the red band LED lighting and the temperature above 20 degrees Celsius/heating may have a significant effect in coagulation of micro-particles.

## Claims

1. A cleaning unit for filter, **characterized in that**: the cleaning unit includes a frame (1) and a dust suction tube (3) provided on the frame (1), the dust suction tube (3) is provided with dust suction pores (4) in communication to the inside of the dust suction tube (3) and a connection port (5) for vacuum cleaner.

2. The cleaning unit for filter according to claim 1, **characterized in that**: the frame (1) is further provided with a light source module and a heating module.

3. The cleaning unit for filter according to claim 1, **characterized in that**: there are a plurality of dust suction pores (4), which may be formed in a shape of hole or slot.

4. The cleaning unit for filter according to claim 1, **characterized in that**: the cleaning unit further includes a driving module in connection with the dust suction tube (3).

5. The cleaning unit for filter according to claim 4, **characterized in that**: the driving module includes a motor (6), a belt (7) and a track, wherein the track and the motor (6) are provided on the frame (1), the end of the dust suction tube (3) is arranged on the track, and the belt (7) is connected with the motor (6) at one end and is connected with the dust suction tube (3) at another end.

6. A self-cleaning air purification apparatus, **characterized in that**: the self-cleaning air purification apparatus includes a filtering unit, a cleaning unit (9) and a particle light-and-heat-coagulation unit (10), wherein the cleaning unit (9) includes a frame (1) provided at the air input side of the filtering unit and a dust suction tube (3) provided on the frame (1), the dust suction tube (3) is provided thereon with dust suction pores (4) in communication to the inside of the dust suction tube (3) and a connection port (5) for vacuum cleaner, and the particle light-and-heat-coagulation unit (10) is integrally provided on the frame (1) or separately provided at the air input side of the filtering unit.

7. The self-cleaning air purification apparatus according to claim 6, **characterized in that**: the particle light-and-heat-coagulation unit (10) includes a light source module and a heating module.

8. The self-cleaning air purification apparatus according to claim 7, **characterized in that**: the light source module is a red-band LED (2), and the heating module is infrared light or electric heating wire.

9. The self-cleaning air purification apparatus according to claim 6, **characterized in that**: the cleaning unit (9) further includes a driving module in connection with the dust suction tube (3).

10. A method for using the self-cleaning air purification apparatus according to claim 6, **characterized in that**: the method comprises the following steps:
(1) turning on the particle light-and-heat-coagulation unit (10) so as to enable the particle light-and-heat-coagulation unit (10) to radiate light and/or heat, wherein the radiated light covers the air flowing area at the air input side of the filtering unit, and the temperature of the air flowing area is raised by the radiated heat to 20-30 degrees Celsius;
(2) after the step (1), filtering air to be processed which is introduced into the self-cleaning air purification apparatus using the filtering unit, and outputting the filtered air;
(3) stop introduction of air to be processed into the self-cleaning air purification apparatus within a defined period, wherein in the defined period, a vacuum cleaner operates, which is connected with the dust suction tube (3) at the connection port (5) for vacuum cleaner, while the dust suction tube (3) is moved on the frame (1) to suck the dust or dirt absorbed on the filtering unit through the dust suction pores (4).
